# EUROPEAN PATENT APPLICATION

(11) **EP 4 123 447 A1**
(43) Date of publication of application: **25.01.2023**
(21) Application number: 22185699.0
(22) Date of filing: 19.07.2022
(51) Int. Cl.: G06F 9/445

(54) **SYSTEMS AND METHODS FOR DISTRIBUTING AND EXECUTING LOADABLE EMBEDDED SOFTWARE EXTENSIONS IN INDUSTRIAL CONTROLLERS**

(30) Priority: 19.07.2021 US 202117379333
(71) Applicant: Rockwell Automation Technologies, Inc., Mayfield Heights, OH 44124-6188 (US)
(72) Inventor: Clark, Daniel W., Mayfield Heights, OH (US); Meeker, Robert B., Mayfield Heights, OH (US); Johnston, David A., Mayfield Heights, OH (US)
(74) Representative: Grünecker Patent- und Rechtsanwälte PartG mbB

(57) **Abstract**

Various embodiments of the present technology generally relate to industrial controller firmware. More specifically, some embodiments relate to systems and methods for developing, deploying, and executing loadable embedded software extensions that expand controller functionality beyond that of what is available in a controller's base firmware. Systems and methods described herein provide for a firmware extension development environment, a firmware extension repository, a firmware extension deployment interface, and various firmware extension executions models. During execution of a control program within an industrial controller, when directed by the logic of the control program to perform an external function, industrial controller firmware may call an external component provided by an extension developed in accordance with the present disclosure to perform the external function.

## Description

### BACKGROUND

In industrial automation environments, many machines are controlled by programmable logic controllers (PLCs). PLCs are computing devices that are used to control industrial automation processes. In many situations, PLCs are intended for harsh conditions associated with industrial automation environments and provide extensive input and output to connect to sensors, actuators, and other devices used by machines that are controlled by PLCs. Because PLCs can be highly specialized to perform specific functions, they often have controller firmware closely coupled to instruction sets that are used to program the PLCs. During operation, the processor in the PLC executes process code that includes the instructions for controlling and performing certain operations. Process code directs lower-level code-the controller firmware-to perform various functions. The controller firmware is software embedded on the controller hardware.

Typically, firmware updates are not released frequently compared to other software for a variety of reasons. Traditionally, functionality is added to the firmware of an industrial controller via periodic firmware updates. This means that there can be a long wait for changes or updates to be made to firmware, despite the fact that there may be urgent needs for updates in the industrial context. Moreover, there may not be enough time to add all required or requested functionality in between updates. Thus, even more time may go by before certain functionality is added to controllers.

It is with respect to this general technical environment that aspects of the present disclosure have been contemplated. Furthermore, although a general environment is discussed, it should be understood that the described examples should not be limited to the general environment identified in the background.

### OVERVIEW

This Overview is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments of the present technology generally relate to firmware and industrial controllers. More specifically, some embodiments relate to creating and deploying loadable embedded software extensions that expand controller functionality beyond that of a controller's base firmware. In an embodiment of the present technology, an industrial controller comprises one or more computer-readable storage media, a processing system operatively coupled to the one or more computer-readable storage media, and program instructions stored on the computer-readable storage media. The program instructions comprise firmware that, when read and executed by the processing system, directs the industrial controller to execute a control program comprising logic for controlling an industrial automation process. During execution of the control program, when directed by the logic of the control program to perform a native function, the firmware further directs the industrial controller to call a native component of the firmware to perform the native function. Furthermore, during execution of the control program, when directed by the logic of the control program to perform an external function, the firmware directs the industrial controller to call an external component provided by an extension to perform the external function.

In some embodiments of the present technology, the firmware, when read and executed by the processing system, further directs the industrial controller to load and install the extension from an extension repository. In some embodiments the extension comprises one or more constraints that define circumstances in which the firmware calls the external component. In some embodiments, the firmware lacks a native component to perform the external function. In certain implementations, the firmware, when read and executed by the processing system, directs the industrial controller to once the external component has performed the external function, receive a result of the external function from the external component and use the result of the external function to perform at least one additional native function performed by an additional native component of the firmware. In another implementation, the firmware, when read and executed by the processing system, may direct the industrial controller to, once the external component has performed the external function, receive a result of the external function from the external component and return the result of the external function to one or more external programs in communication with the industrial controller. In yet another embodiment, the firmware, when read and executed by the processing system, directs the industrial controller to check for recently added extensions.

In an alternative embodiment of the present technology, a computing apparatus comprises one or more computer-readable storage media, a processing system operatively coupled to the one or more computer-readable storage media, and program instructions stored on the computer-readable storage media. The program instructions, when read and executed by the processing system, direct the computing apparatus to generate a firmware extension for an industrial controller, wherein the firmware extension provides an external component to perform an external function, wherein existing firmware lacks a native component to perform the external function. The program instructions, when read and executed by the processing system, further direct the computing apparatus to instruct the industrial controller to install the firmware extension and provide, to the industrial controller, a control program comprising logic for controlling an industrial automation process, wherein the logic of the control program directs the industrial controller to, during execution of the control program, call an external component provided by the firmware extension to perform the external function.

In yet another embodiment of the present technology, a method of operating an industrial controller, comprises executing a control program comprising logic for controlling an industrial automation process and, during execution of the control program, when directed by the logic of the control program to perform a native function, calling a native component of firmware of the industrial controller to perform the native function. The method further comprises, during execution of the control program, when directed by the logic of the control program to perform an external function, calling an external component provided by an extension to perform the external function.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an example of a process for creating, distributing, and executing industrial controller firmware extensions in accordance with some embodiments of the present technology;
Figure 2 illustrates an example industrial automation environment in accordance with some embodiments of the present technology;
Figure 3 illustrates a process for developing, distributing, and deploying firmware extensions for industrial controllers in accordance with some embodiments of the present technology;
Figure 4 illustrates an example of a multi-core processor system in which certain embodiments of the present technology may be implemented;
Figures 5A-5D illustrate different execution environments in accordance with some embodiments of the present technology;
Figure 6 illustrates a series of steps for executing firmware extensions in industrial controllers in accordance with some embodiments of the present technology;
Figure 7 illustrates a series of steps for generating and deploying industrial controller firmware extensions in accordance with some embodiments of the present technology;
Figure 8 illustrates an example of a computing device that may be used in accordance with some embodiments of the present technology;
Figure 9 illustrates an example of an industrial controller that may be used in accordance with some embodiments of the present technology.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

Various embodiments of the present technology generally relate to firmware in industrial controllers, such as programmable logic controllers (PLCs). More specifically, embodiments of the present technology include systems and methods for developing, distributing, deploying, and executing firmware (i.e., embedded software) extensions for industrial controllers. In many cases, firmware updates are not released frequently compared to other software for a variety of reasons. Traditionally, functionality is added to the firmware of an industrial controller via firmware updates. This means that there can be a long wait for changes or updates to be made to firmware, despite the fact that there may be urgent needs for updates in the industrial context. Moreover, there may not be enough time to add all required or requested functionality in between updates, which may result in even more time to go by before desired functionality is added to controllers.

Thus, the present technology provides a framework for adding new functionality to industrial controllers without the need to perform entire firmware updates, thereby allowing extended controller functionality to address customer needs faster while also enhancing security and limiting additional functionality that is possible from outside the controller.

Four main components are described in detail below: a design environment, an extension repository, a deployment interface, and an execution environment within an industrial controller. A design environment for extension authors, in accordance with the present disclosure, includes an application programming interface (API), toolchains, and a build environment. The design environment allows developers to design functionality to add to a controller without waiting for such changes to be made in an official update to be released in the future, thereby filling the gap between functionality that is not yet available in firmware that users want to take advantage of In an embodiment, extension developers write extension code and make use of a stable version-controlled API that allows access to controller firmware internals, such as access to memory management, flash memory (e.g., secure digital (SD) card), input/output (I/O) data, embedded functions, user project elements, and the like. The API may be a common industrial protocol (CIP) interface or make direct calls to firmware libraries, and consists of header files and libraries, which may be pre-built for certain architectures, wherein CIP is one example of an industrial communication protocol that may be used in accordance with the present technology. Extension authors can compile and link their code against the API library to generate an extension executable. The API may expand over time to include extra functionality but, in an embodiment, is backwards compatible to allow older extensions to continue working in newer firmware revisions of the controller. The design environment provides toolchains and precompiled libraries to allow developers to generate an executable for their extension that is suited to run on compatible controllers. The environment also provides tooling to cryptographically protect generated extension executables.

An extension repository, in accordance with the present disclosure, comprises programming software that allows users to select and/or purchase and deploy them to a controller. When an extension is selected, an encrypted extension is downloaded. A user may then, via the programming software, target a controller and deploy the extension. Once deployed, extensions can be activated, disabled, or deleted by the user.

A deployment interface, in accordance with the present disclosure, enables version interoperability support by acting as an interface between the programming software and the controller. The deployment interface, in some examples, is a common industrial protocol (CIP) interface that supports version negotiation and deployment and provides an interface to enable and/or disable extensions. A user may, via the deployment interface, pass tags from their application to be used as inputs and outputs to the extension. The programming software deploys extensions via a CIP interface to a compatible controller. In certain embodiments, the deployment interface offers version management capabilities along with forward/backward compatibility support. Each extension is assigned a manifest ID and the RTO can register and activate extensions.

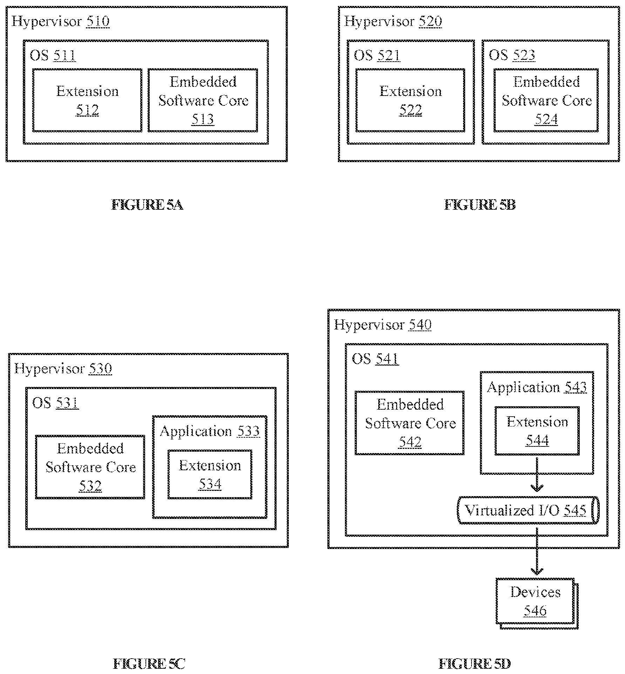

The execution environment, in accordance with the present disclosure, supports various levels of security and isolation of extension execution from within the controller. The execution environment may vary depending on the controller architecture on which it is installed. A dynamic scalable execution model is disclosed herein, wherein the execution model may adapt based on target controller virtualization support. Four specific execution environments are discussed; however, additional execution environments are possible and contemplated herein. The four execution environments that will be discussed in further detail in reference to Figures 5A-5D include the kernel execution model, the guest execution model, the application execution model, and the isolated execution model.

Firmware extensions may enable a large variety of firmware functionality to be added to industrial controllers. In an example, a firmware extension may, when executed, gather a certain type of information about the controller and environment and save the information in a user-defined tag, wherein executing the firmware extension is initiated when the extension is called by the firmware executing process code. Examples of information that might be gathered include ethernet configuration, user task/program structure and execution statistics, precision time protocol (PTP) information, configuration information for modules in the local chassis, and messages and LED status on the controller display. A firmware extension may alternatively, in an example, provide recipe management functions utilizing the SD card of the controller. In yet another example, a firmware extension may provide debugging or code gathering functions to help diagnose issues.

In some cases existing methods for gathering the results provided by an extension as disclosed herein may exist. However, traditional and/or manual methods of obtaining these results are often time-consuming, difficult, labor-intensive, and sometimes impossible. For example, a programmer may, without an extension, choose to locate any necessary data through CIP objects that exist in the controller. However, obtaining data in this manner is a highly un-optimized method as the developer may have to go through tens or hundreds of CIP objects, gather a piece of information from each, and combine that information to create the useful result they are seeking. This approach can have major limitations. For example, the process of searching each of the objects to obtain the data may create performance issues in the controller. Further, the process may or may not actually provide the desired functionality. Additionally, the interface may be hidden, locked down, or may change in the future, rendering any prior code to obtain the result obsolete in future versions. Adding an extension to the controller that provides the aggregated data thereby simplifies the process tremendously. The present technology therefore eliminates the need to use CIP messages to achieve the desired functionality.

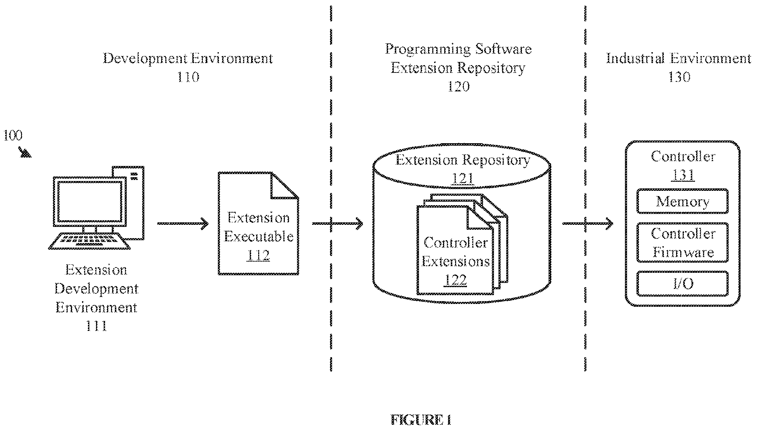

Figure 1 illustrates a simplified embedded software extension implementation environment used to depict process 100. The embedded software extension implementation environment of Figure 1 includes development environment 110, programming software extension repository 120, and industrial environment 130. Development environment 110 includes extension development environment 111 and extension executable 112. Programming software extension repository 120 includes extension repository 121 which includes controller extensions 122. Industrial environment 130 includes controller 131.

Extension development environment 111 includes any computing device that can be used to load and use a design environment for extension authors. Extension authors or developers may, within extension development environment 111, to write extension code and make use of a stable version controller API that allows access to controller firmware internals, which may include access to memory management, flash memory (e.g., SD card), embedded functionality (e.g., native functions of the controller), user project elements, and the like. The API may be expanded over time to include extra functionality. In some embodiments, the API is backwards compatible to allow older extensions to continue working in newer firmware revisions of a controller, such as controller 131. The extension development environment provides toolchains and precompiled libraries to allow developers to generate an executable for their extension that is suited to run on any compatible controller. Extension execution environment also provides tooling to cryptographically protect generated extension executables.

Extension executable 112 is representative of any extension executable that may be developed in accordance with the present disclosure. Extension executable 112 represents all or part of an executable extension that will be stored in extension repository 121. A firmware extension, such as extension executable 112, provides one or more components to perform one or more functions not natively available within firmware of controller 131.

Once extension executable is fully developed, it is loaded into extension repository 121, which stores controller extensions 122. Extension repository 121 allows users to buy or acquire controller firmware extensions, wherein users may buy or acquire any of the available extensions from controller extensions 122, including extension executable 112. When a user purchases or otherwise downloads an extension, an encrypted extension may be downloaded such that the user may employ programming software to target a controller and deploy the extension. In some embodiments, the extension is not encrypted. Once deployed, extensions may be activated, disabled, or deleted by the user. An extension deployment interface is further provided for users to manage extensions between the programming software and controller. In certain embodiments, the extension deployment interface is a CIP interface that support version negotiation, extension deployment, and enabling and/or disabling of extensions.

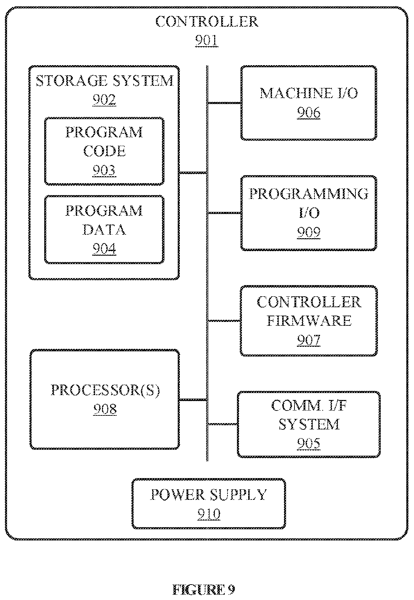

Industrial environment 130 is representative of any industrial environment in which controller 131 resides. Industrial environment 130 comprises an extension execution environment. Controller 131 may comprise a memory, controller firmware, various types of input/output (I/O) interfaces, and additional components. In some examples, controller 131 is controller 901 as described with respect to Figure 9. Once extension executable 112 has been chosen for controller 131, controller 131 may download and install the firmware extension, as managed by the extension deployment interface. Once extension executable 112 is installed on controller 131, it may be employed as directed by a control program (i.e., process code) running on controller 131, wherein the controller program uses logic for controlling a process. The logic of the controller program may direct the controller firmware to perform a native function, wherein the native function is a function already available within the controller firmware. When directed to perform the native function, the firmware may call a component of the firmware to perform the native function. Alternatively, or additionally, the logic of the controller program may direct the controller firmware to perform a non-native (i.e., external) function. When directed to perform the non-native function, the firmware may call an external component, such as extension executable 112, to perform the external function.

An industrial controller, such as controller 131, may support a number of execution models with various levels of isolation and security. Model support depends on overall firmware and hardware architecture of controller 131. Possible execution models may include a kernel execution model, a guest execution model, an application execution model, an isolated execution, or different execution model for executing firmware extensions within industrial controllers.

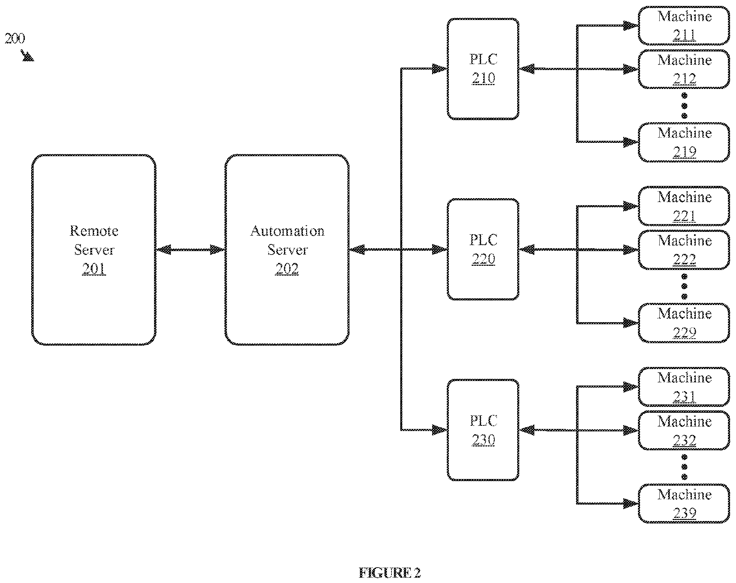

Figure 2 illustrates an example of an industrial automation environment that may implement firmware extension systems and processes as described herein. Figure 2 includes industrial automation environment 200. Industrial automation environment 200 includes remote server 201, automation server 202, PLC 210, PLC 220, PLC 230, machines 211-219, machines 221-229, and machines 231-239. Each of PLC 210, PLC 220, and PLC 230 may be representative of controller 131 from Figure 1, in an example. Industrial automation environment 200 may be any automation environment including, for example, an oil refinery, an automotive automation line, and so forth. Each of machines 211-219, machines 221-229, and machines 231-239 may be representative of one or more machines in communication with one or more industrial PLCs. The machines may include sensors and other components that have inputs and outputs which may be controlled and read by the industrial PLCs.

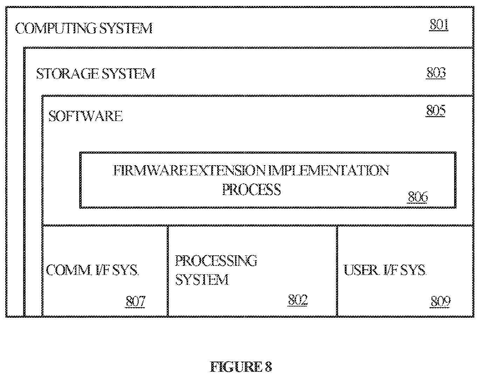

Remote server 201 may be any one or more suitable computing devices such as, for example, computing system 801 as described with respect to Figure 8. Remote server 201 may be a computing device from which updates to a PLC (e.g., one or more of PLC 210, PLC 220, and PLC 230) may be served. The updates may include instruction set updates, firmware updates, routine updates, extension uploads, and so forth. The instruction set architecture includes an instruction set library that provides the foundation of the instructions used to program a PLC (e.g., one or more of PLC 210, PLC 220, and PLC 230) for controlling a machine (e.g., one or more of machines 211-219, machines 221-229, or machines 231-239). Such instructions may include function that can be used for reading and writing input and output values to industrial machines (e.g., one or more of machines 211-219, machines 221-229, or machines 231-239). When updates occur, instructions are added, removed, or updated in the instruction set library or other changes within the instruction set library or a partition of the instruction set library are made. For example, a data type modification may be an update, which may include a modification to the data type or may include a modification of the data type used for an instruction. An update is sent from remote server 201 to automation server 202 for proliferating to one or more of PLC 210, PLC 220, and PLC 230 to implement the update. An update may be an update to one or more partitions of the instruction set library, to the entire instruction set library, or to something else within the PLC.

Automation server 202 may be any one or more suitable computing devices such as, for example, computing system 801 as described with respect to Figure 8. Automation server 202 may be one or more centralized servers for providing information to and receiving information from PLC 210, PLC 220, or PLC 230 within industrial automation environment 200. For example, automation server 202 may receive updates or extensions from remote server 201 and proliferate them to one or more PLCs. In some embodiments, automation server 202 may make decisions upon receipt of updates or extensions as to which PLCs should receive the updates or extensions. In some embodiments, updates or extensions reside in automation server 202 and PLC 210, PLC 220, and PLC 230 may access and download appropriate updates or extensions as needed. For example, automation server 202 may send a notification to PLC 210 to notify it of an available extension. In some embodiments, automation server 202 may notify only impacted PLCs of the available update or extension. Programmable logic controllers (PLCs such as PLC 210, PLC 220, and PLC 230) are computing devices that are developed and designed to be rugged enough to withstand harsh conditions that may be associated with an industrial automation environment and provide extensive I/O to connect to sensors, actuators, and other control devices of machines that are controller by the PLCs. PLC 210, PLC 220, and PLC 230 may be any suitable programmable computing devices, such as, for example, controller 901 as described with respect to Figure 9. While three PLCs are depicted in Figure 2, industrial automation environment 200 may include any number of PLCs. Each PLC in industrial automation environment 200 may control any number of machines, wherein the machines may be any industrial automation machines having I/O that can be received from and set to PLCs.

In use, a programmer, developer, or similar user may use available instruction sets to develop logic that is utilized in executable code of a PLC. The executable code may include programs comprising routines developed using the programming instructions in the PLC and that read and write I/O values to and from machines such that when the executable code of the PLC is executed, the machines perform operations under control of the PLC based on the execution of the executable code.

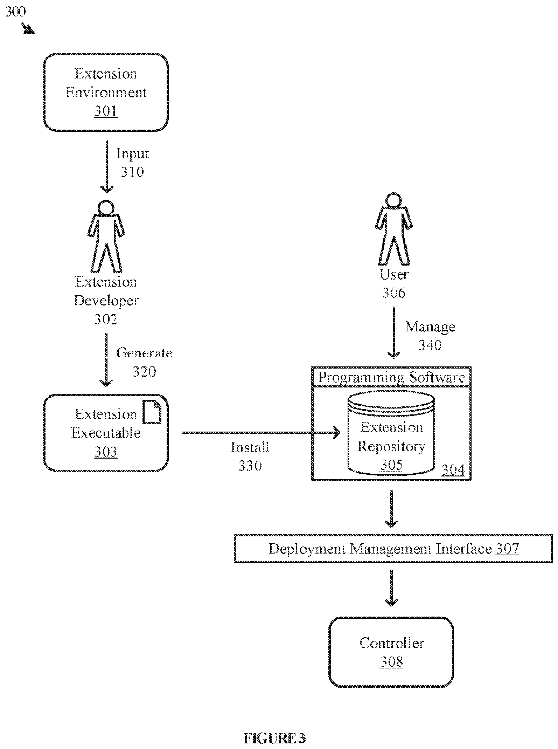

Figure 3 illustrates loadable embedded software extension system 300. Loadable embedded software extension system 300 includes extension environment 301, extension developer 302, extension executable 303, programming software 304, extension repository 305, user 306, deployment management interface 307, and controller 308 as well as the steps: input step 310, generate step 320, install step 330, and manage step 340.

Extension environment 301 is representative of any development environment provided to extension developers in which a firmware extension in accordance with the present technology can be developed. Included in extension environment 301 are compiler tools, API libraries, API header files, documentation, and tooling to build, encrypt, and sign executables.

Extension developer 302 is representative of any team or individual who is responsible for creating an embedded software extension and making it available for users of industrial controllers. Extension executable 303 is representative of an encrypted and signed deployable binary. Industrial controller user may download a binary, such as extension executable 303, and deploy it to one or more controllers via the programming software. Extension repository 305 is representative of a data store where users can install extensions and subsequently deploy the extensions to a controller. In some embodiments, extension repository 305 and programming software 304 behave similarly to an app-store, wherein a user can shop for and/or choose firmware extensions to purchase and/or download. User 306 may be any industrial controller user, such as a customer of an industrial automation company, that can download and deploy embedded software extensions to an industrial controller in accordance with the present technology. Deployment management interface 307 is representative of a robust interface between the programming software and industrial controller that supports deployment of the extension. Deployment management interface 307 also provides version compatibility management. Deployment management interface 307 is, in certain embodiments, implemented in both the programming software and the controller to create a common understanding of how to deploy and manage executables. Controller 308 is representative of any industrial controller comprising firmware on which executable embedded software extensions can be loaded, installed, and executed.

According to the example of Figure 3, extension environment 301, once loaded, receives input in input step 310 from extension developer 302. Once the extension is developed, extension environment generates extension executable in generate step 320. Once extension executable 303 is generated, is can then be installed into programming software 304 and stored in extension repository 305 in install step 330. Next, user 306 manages programming software 304 and extension repository 305 in manage step 340.

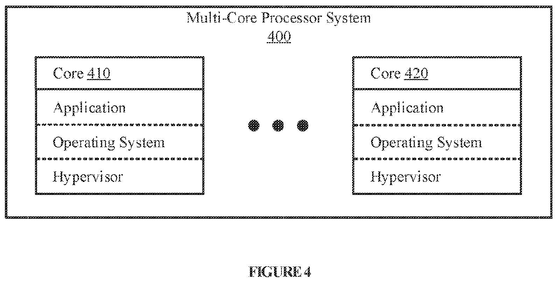

Figure 4 illustrates multi-core processor system 400, which is representative of an industrial controller architecture that may be used in many embodiments of the present technology. The industrial controller architecture of Figure 4 may be used to execute firmware extensions as described herein. Multi-core processor system 400 includes at least core 410 and core 420, wherein each of core 410 and core 420 comprises an application on top of an operating system (OS) on top of a hypervisor. In certain embodiments, the hypervisor is a type-1 bare metal hypervisor. However, the hypervisor may be any hypervisor type and may include one or more layers below the hypervisor not shown in Figure 4. Multi-core processor system 400 may include more cores than shown in Figure 4. Multi-core processor system 400 has multiple levels of privilege. The Application level is the least privileged element in multi-core processor system 400 and the hypervisor is the most privileged element in multi-core processor system 400. Not all privilege levels may be present on any given core or industrial controller. What privilege levels are present on a given product may depend on what virtualization capabilities exist for a processor hosting the controller architecture shown in Figure 4.

Each of Figures 5A-5D, shows a different execution model in accordance with the present technology. Each execution model represents a different method of hosting firmware extensions on industrial controllers. Execution models may be implemented depending on what privileges levels are available, as described in reference to Figure 4. Further, the various execution models each have pros and cons to their use as described below, but the available execution models may be limited by the controller executing the extension.

Figure 5A illustrates the kernel execution model and includes hypervisor 501, OS 511, extension 512, and embedded software core 513. In the kernel execution model, firmware extensions are hosted at the same privilege level as the OS kernel. Examples include loadable kernel modules and downloadable kernel modules. The kernel execution model is the basic model for processors that do not have any virtualization support. The kernel execution model offers no isolation between the extensions and the base controller firmware. The kernel execution model may be beneficial because it does not require modern virtualization processor hardware. Similarly, this paradigm may be supported in many existing operating systems. However, in the kernel execution model, errant extensions can crash the OS and hurt the controller. For example, there is no protection against an extension abusing embedded software resources (e.g., too many writes to the SD card). Not all operating systems support such a model.

Figure 5B illustrates the guest execution model and includes hypervisor 520, OS 521, extension 522, OS 523, and embedded software core 524. The guest execution model allows the hypervisor to host two instances of a guest OS on a core, wherein one instance is reserved for extensions and the other for the embedded software core. The guest execution model may be beneficial because it can support any OS that does not allow loadable code natively. Also beneficially, errant extension execution may not alter the embedded software core because of the isolation created by the separate instances of the guest OS. However, the guest execution model provides no protection against extension-abusing embedded software resources (e.g., too many writes to the SD card), and there is some small loss of performance that the embedded software code cannot control due to hypervisor context switches.

Figure 5C illustrates the application execution model and includes hypervisor 530, OS 531, embedded software core 532, application 533, and extension 534. The application execution model supports extensions running as applications and thus does not interfere with the OS kernel. The application execution model requires virtualization support to isolate the application and the OS levels. In the present example, the embedded controller firmware runs as the OS level. The application execution model may be beneficial because the paradigm is support in many existing operating systems and because errant extension execution does not alter the embedded software core. However, the application execution model may provide no protection against extension-abusing embedded software resources (e.g., too many writes to the SD card), and it may require processor virtualization support for application-level privilege.

Figure 5D illustrates the isolated application execution model and includes hypervisor 540, operating system 541, embedded software core 542, application 543, extension 544, virtualized I/O 545, and devices 546. The isolated application execution model extends the application execution model to add device level protection to further isolate the extension impact on the embedded software core. The industrial controller running the isolated application execution model may limit access or bandwidth to hardware devices. The isolated application execution model may require full I/O and execution virtualization processor support. The isolated application execution model may be beneficial because the paradigm is support in many existing operating systems and because errant extension execution does not alter the embedded software core. Moreover, the device-level protection provided by the isolated application execution model limits the impact of extensions on the embedded software core. However, the isolated application execution model may require processor virtualization support for application-level privilege and I/O virtualization.

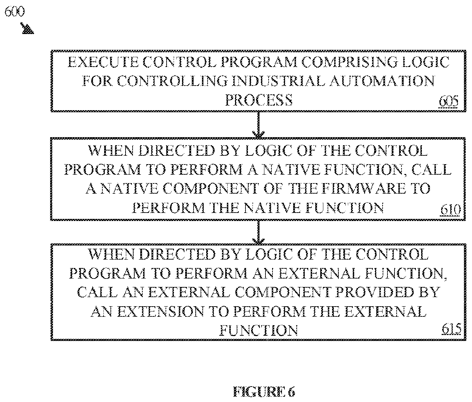

Figure 6 is a flow chart illustrating process 600 for executing firmware extensions in an industrial automation controller in accordance with certain embodiments of the present technology. In step 605, an industrial controller (e.g., controller 131 as described with respect to Figure 1; PLC 210 as described with respect to Figure 2) executes a control program comprising logic for controlling an industrial automation process. The control program is used to control one or more machines (e.g., machine 211 as described with respect to Figure 2). In step 610, the industrial controller, when directed by the logic of the control program to perform a native function call, calls a native component of the firmware to perform the native function. The native function may be any function that is already available within existing firmware of the industrial controller. In step 615, when directed by logic of the control program to perform an external function, the industrial controller calls an external component provided by a firmware extension (e.g., extension executable 112 with respect to Figure 1, extension executable 303 with respect to Figure 3, and extension 512, extension 522, extension 534, and extension 544 with respect to Figures 5A-5D) to perform the external function. The external function may be any function that is not already available within the existing firmware of the industrial controller. The external function may include one or more constraints that define circumstances in which the firmware calls the external component. In some examples, the external function may use of information or results from one or more completed function calculations. For example, the external function executed in step 615 may use all or part of the result of the native function executed in step 610. Similarly, one or more native functions may use all or part of the result of the external function executed in step 615 to perform other calculations or functions. Moreover, one or more additional external functions may use results from one or more external and/or native functions to perform a function and reach a result.

Process 600 may include fewer or additional steps than what is shown in the example of Figure 6. In some embodiments, process 600 further includes loading and installing the extension from a repository. Process 600 may further include, once the external component has performed the external function, receiving a result of the external function from the external component and using the result of the external function to perform at least one additional native function performed by an additional native component of the firmware. Alternatively, process 600 may include, once the external component has performed the external function, receiving a result of the external function from the external component and return the result of the external function to one or more external programs in communication with the industrial controller. Process 600 may further include checking for extensions that were recently added to the industrial controller.

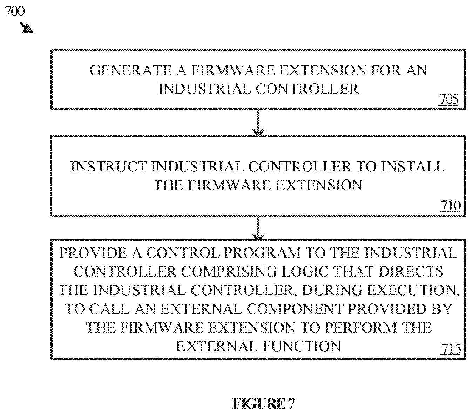

Figure 7 is a flow chart illustrating process 700 for developing and deploying firmware extensions in an industrial automation controller in accordance with certain embodiments of the present technology. In step 705, one or more computing devices (e.g., extension development environment 111 with respect to Figure 1; extension environment 301 with respect to Figure 3) are used to generate a firmware extension for an industrial controller. In step 710, one or more computing devices are used to instruct the industrial controller to install the firmware extension. In step 715, one or more computing devices are used to provide a control program to the industrial controller (e.g., process code), wherein the control program comprises logic. The logic in the control program directs the industrial controller, during execution, to call an external component provided by the firmware extension to perform the external function. The external function, in the present example, is a function provided by a firmware extension (e.g., extension executable 112 with respect to Figure 1, extension executable 303 with respect to Figure 3, and extension 512, extension 522, extension 534, and extension 544 with respect to Figures 5A-5D), wherein the function is not available within the existing firmware installed on the industrial controller.

Process 700 may include fewer or additional steps than what is shown in the example of Figure 7. In some embodiments, process 700 further includes uploading the firmware extension to an extension repository, such as extension repository 121 or extension repository 305. In certain embodiments, the control program further includes logic that directs the industrial controller, during execution, to call a native component provided by the firmware extension to perform the native function. Process 700 may further include, once the external component has performed the external function, receiving a result of the external function from the external component and using the result of the external function to perform at least one additional native function performed by an additional native component of the firmware. Alternatively, process 700 may include, once the external component has performed the external function, receiving a result of the external function from the external component and return the result of the external function to one or more external programs in communication with the industrial controller. Process 700 may further include checking for extensions that were recently added to the industrial controller.

Figure 8 illustrates computing system 801 to perform firmware extension development and/or deployment according to an implementation of the present technology. Computing system 801 is representative of any system or collection of systems with which the various operational architectures, processes, scenarios, and sequences disclosed herein for firmware extension implementation may be employed. Computing system 801 may be implemented as a single apparatus, system, or device or may be implemented in a distributed manner as multiple apparatuses, systems, or devices. Computing system 801 includes, but is not limited to, processing system 802, storage system 803, software 805, communication interface system 807, and user interface system 809 (optional). Processing system 802 is operatively coupled with storage system 803, communication interface system 807, and user interface system 809.

Processing system 802 loads and executes software 805 from storage system 803. Software 805 includes and implements firmware extension implementation process 806, which is representative of any of the firmware development or deployment processes discussed with respect to the preceding Figures. When executed by processing system 802 to provide firmware extension implementation functions, software 805 directs processing system 802 to operate as described herein for at least the various processes, operational scenarios, and sequences discussed in the foregoing implementations. Computing system 801 may optionally include additional devices, features, or functionality not discussed for purposes of brevity.

Referring still to Figure 8, processing system 802 may comprise a microprocessor and other circuitry that retrieves and executes software 805 from storage system 803. Processing system 802 may be implemented within a single processing device but may also be distributed across multiple processing devices or sub-systems that cooperate in executing program instructions. Examples of processing system 802 include general purpose central processing units, graphical processing units, application specific processors, and logic devices, as well as any other type of processing device, combinations, or variations thereof.

Storage system 803 may comprise any computer readable storage media readable by processing system 802 and capable of storing software 805. Storage system 803 may include volatile and nonvolatile, removable and non-removable media implemented in any method or technology for storage of information, such as computer readable instructions, data structures, program modules, or other data Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 803 may also include computer readable communication media over which at least some of software 805 may be communicated internally or externally. Storage system 803 may be implemented as a single storage device but may also be implemented across multiple storage devices or sub-systems co-located or distributed relative to each other. Storage system 803 may comprise additional elements, such as a controller, capable of communicating with processing system 802 or possibly other systems.

Software 805 (including firmware extension implementation process 806) may be implemented in program instructions and among other functions may, when executed by processing system 802, direct processing system 802 to operate as described with respect to the various operational scenarios, sequences, and processes illustrated herein. For example, software 805 may include program instructions for developing firmware extensions for industrial controllers as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 805 may include additional processes, programs, or components, such as operating system software, virtualization software, or other application software. Software 805 may also comprise firmware or some other form of machine-readable processing instructions executable by processing system 802.

In general, software 805 may, when loaded into processing system 802 and executed, transform a suitable apparatus, system, or device (of which computing system 801 is representative) overall from a general-purpose computing system into a special-purpose computing system customized to provide a firmware extension development and/or deployment environment as described herein. Indeed, encoding software 805 on storage system 803 may transform the physical structure of storage system 803. The specific transformation of the physical structure may depend on various factors in different implementations of this description. Examples of such factors may include, but are not limited to, the technology used to implement the storage media of storage system 803 and whether the computer-storage media are characterized as primary or secondary storage, as well as other factors.

For example, if the computer readable storage media are implemented as semiconductor-based memory, software 805 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 807 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 801 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and need not be discussed at length here.

Figure 9 illustrates controller 901 to perform firmware extension execution according to an implementation of the present technology. Controller 901 may be any of the described controllers and/or PLCs discussed herein. As described further below, controller 901 includes extensive input/output to connect to sensors, actuators, and other control devices of the machines that are controlled by controller 901.

Controller 901 comprises processor 908 interfaced with other hardware, storage system 902, which may include any suitable tangible, non-transitory, computer-readable medium, sum as random access memory (RAM), read-only memory (ROM), electrically erasable programmable read-only memory (EEPROM), or the like, and can embody components that configure operation of controller 901. Storage system 902 stores program code 903 and program data 904. In certain embodiments, controller 901 includes additional storage not shown. Figure 9 depicts controller 901 with processor(s) 908, indicating that controller 901 may include one or more processors, including dual core processors, multi-core processors, and distributed processors.

Controller 901 executes program code 903 that configures controller 901 to perform one or more operations described herein. Examples of program code 903 include, in various embodiments, ladder logic programs, such as programs that include routines used to controller machines via machine I/O 906. Program code 903 may be resident in storage system 902 or any suitable computer-readable medium and may be executed by processor(s) 908 or any other suitable processor.

Controller 901 may generate or receive program data 904 by virtue of executing program code 903. For example, sensor data from machines and other industrial data are examples of program data 904 that may be used by controller 901 during execution of program code 903 or other code, such as controller firmware 907, for example.

Controller 901 can include communication interface system 905, which is representative of one or more of any components that facilitate a network connection. In some examples, communication interface system 905 facilitates a wireless connection and includes wireless interfaces such as IEEE 802.11, BLUETOOTH^{™}, or radio interfaces for accessing cellular telephone networks (e.g., a transceiver/antenna for accessing CDMA, GSM, UMTS, or other mobile communications network). In other examples, communication interface system 905 can be wired and include interfaces such as Ethernet, USB, or IEEE 1394. For example, a controller in accordance with the present disclosure may communicate with other controller or with automation servers using communication interface system 905.

Controller 901 includes machine I/O 906 that is coupled to the I/O interfaces of machines that controller 901 controls. In certain embodiments there is extensive machine I/O in controller 901 so that many inputs and outputs can be read and transmitted between controller 901 and the machines. The machine I/O communicates via controller firmware 907 with storage system 902, which may implement one or more APIs to allow routines to utilize the machine signals from machine I/O 906. Controller firmware 907 provides access to many hardware and embedded function of controller 901 including operating system functions, schedulers, timers, and a hardware abstraction layer. An API within controller firmware 907 may exist to allow access to these hardware and embedded functions by providing an interface for program code 903 to interact with controller firmware 907.

Controller 901 includes programming I/O 909 which provides and interface for a technician or developer to review, modify, and create programs (e.g., ladder logic programs) to execute for controlling machines via machine I/O 906. Programming I/O 909 may provide an interface for a technician, developer, or other user to plug a device into controller 901 for visualizing programs.

Controller 901 further includes power supply 910. Power supply 910 is an industrial power supply for use in industrial automation environments. In some embodiments, power supply 910 is redundant to avoid environment failure or downtime.

While some examples provided herein are described in the context of a firmware extension development or deployment device, it should be understood that the condition systems and methods described herein are not limited to such embodiments and may apply to a variety of other extension implementation environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. An industrial controller comprising:
one or more computer-readable storage media;
a processing system operatively coupled to the one or more computer-readable storage media; and
program instructions stored on the computer-readable storage media, wherein the program instructions comprise firmware that, when read and executed by the processing system, directs the industrial controller to:
execute a control program comprising logic for controlling an industrial automation process;
during execution of the control program, when directed by the logic of the control program to perform a native function, call a native component of the firmware to perform the native function; and
during execution of the control program, when directed by the logic of the control program to perform an external function, call an external component provided by an extension to perform the external function.

2. The industrial controller of claim 1, wherein the firmware, when read and executed by the processing system, further directs the industrial controller to load and install the extension from an extension repository.

3. The industrial controller of claim 2, wherein the extension comprises one or more constraints that define circumstances in which the firmware calls the external component.

4. The industrial controller of one of claims 1 to 3, wherein the firmware lacks a native component to perform the external function.

5. The industrial controller of one of claims 1 to 4, wherein the firmware, when read and executed by the processing system, further directs the industrial controller to:
once the external component has performed the external function, receive a result of the external function from the external component; and
use the result of the external function to perform at least one additional native function performed by an additional native component of the firmware.

6. The industrial controller of one of claims 1 to 5, wherein the firmware, when read and executed by the processing system, further directs the industrial controller to:
once the external component has performed the external function, receive a result of the external function from the external component; and
return the result of the external function to one or more external programs in communication with the industrial controller.

7. The industrial controller of one of claims 1 to 6, wherein the firmware, when read and executed by the processing system, further directs the industrial controller to check for recently added extensions.

8. A computing apparatus comprising:
one or more computer-readable storage media;
a processing system operatively coupled to the one or more computer-readable storage media; and
program instructions stored on the computer-readable storage media, wherein the program instructions, when read and executed by the processing system, direct the computing apparatus to:
generate a firmware extension for an industrial controller, wherein the firmware extension provides an external component to perform an external function, wherein existing firmware lacks a native component to perform the external function;
instruct the industrial controller to install the firmware extension; and
provide, to the industrial controller, a control program comprising logic for controlling an industrial automation process, wherein the logic of the control program directs the industrial controller to, during execution of the control program, call an external component provided by the firmware extension to perform the external function.

9. The computing apparatus of claim 8, wherein to instruct the industrial controller to install the firmware extension, the program instructions, when read and executed by the processing system, direct the computing apparatus to use an industrial communication protocol.

10. The computing apparatus of claim 8 or 9, wherein the program instructions, when read and executed by the processing system, further direct the computing apparatus to:
upload the firmware extension to an extension repository; and
prior to instructing the industrial controller to install the firmware extension, instruct the industrial controller to download the firmware extension from the extension repository.

11. The computing apparatus of one of claims 8 to 10, at least one of:
wherein the firmware extension comprises one or more constraints that define circumstances in which the existing firmware calls the external component;
wherein the logic of the control program further directs the industrial controller to, during execution of the control program, call a native component to perform a native function; and
wherein, once the external component has performed the external function, the program instructions, when read and executed by the processing system, further direct the computing apparatus to receive a result of the external function from the industrial controller.

12. The computing apparatus of one of claims 8 to 11, wherein the logic of the control program further directs the industrial controller to:
once the external component has performed the external function, receive a result of the external function from the external component; and
return the result of the external function to one or more external programs in communication with the industrial controller.

13. A method of operating an industrial controller, the method comprising:
executing a control program comprising logic for controlling an industrial automation process;
during execution of the control program, when directed by the logic of the control program to perform a native function, calling a native component of firmware of the industrial controller to perform the native function; and
during execution of the control program, when directed by the logic of the control program to perform an external function, calling an external component provided by an extension to perform the external function.

14. The method of claim 13, wherein the firmware of the industrial controller lacks a native component to perform the external function.

15. The method of claim 13 or 14, at least one of:
further comprising:
loading the extension from an extension repository; and
installing the extension onto the industrial controller.
wherein the extension comprises one or more constraints that define circumstances in which the firmware of the industrial controller calls the external component;
the method further comprising:
once the external component has performed the external function, receiving a result of the external function from the external component; and
using the result of the external function to perform at least one additional native function performed by an additional native component of the firmware; and
the method further comprising:
once the external component has performed the external function, receiving a result of the external function from the external component; and
returning the result of the external function to one or more external programs in communication with the industrial controller.
